# EUROPÄISCHE PATENTSCHRIFT

(11) **EP 2 417 289 B1**
(45) Veröffentlichungstag und Bekanntmachung des Hinweises auf die Patenterteilung: **14.08.2013**
(21) Anmeldenummer: 10718445.9
(22) Anmeldetag: 01.04.2010
(51) Int. Cl.: D01H 5/74, B23D 57/00

(54) **LEITROLLE FÜR DRÄHTE**
GUIDE ROLLER FOR WIRES
GALET DE GUIDAGE POUR FILS

(30) Priorität: 06.04.2009 DE 102009016545
(43) Veröffentlichungstag der Anmeldung: 15.02.2012
(73) Patentinhaber: Xperion GmbH, 32052 Herford (DE)
(72) Erfinder: HENSS, Thomas, 64668 Rimbach (DE); SCHWARZ, Marcus, 64646 Heppenheim/Oberlaudenbach (DE)
(74) Vertreter: Bittner, Thomas L.
(86) Internationale Anmeldenummer: PCT/DE2010/000382
(87) Internationale Veröffentlichungsnummer: WO 2010/115406

(56) Entgegenhaltungen:
- EP-A2- 0 788 858
- DE-A1- 10 349 287
- DE-A1- 19 717 379

## Beschreibung

Die Erfindung betrifft eine Leitrolle für Drähte, umfassend einen in Längsrichtung abschiebbaren Beschichtungsträger in Gestalt eines Hohlzylinders, der durch einen zylindrischen Stabilisierungsträger aus CFK oder aus Metall auf einem Nabenteil abgestützt ist.

### Hintergrund der Erfindung

Eine solche Leitrolle für Drähte ist aus der DE 197 17 379 A1 bekannt. Die Leitrolle umfasst eine Hülse, auf der ein Belag aufgegossen ist. Die Hülse kann aus einem CFK-Material gefertigt sein.

Das Dokument DE 103 49 287 A1 offenbart eine Drahtführungsrolle mit einem Grundkörper, einem Stabilisierungsträger und einem Beschichtungsträger mit einer Beschichtung. Der Stabilisierungsträger und/oder der Beschichtungsträger können aus einem CFK-Material gebildet sein.

### Zusammenfassung der Erfindung:

Der Erfindung liegt die Aufgabe zur Grunde, eine Leitrolle für Drähte zu zeigen, die einfach in der Herstellung ist, bei der der Beschichtungsträger einfach zu montieren und zu demontieren ist und die einen guten Rundlauf hat. Außerdem muss in der Folge eine zumindest einfache Montage/Demontagemöglichkeit bei guten Form- und Lagetoleranzen erreicht werden.

Diese Aufgabe wird erfindungsgemäß mit den kennzeichnenden Merkmalen von Anspruch 1 gelöst. Auf vorteilhafte Ausgestaltungen nehmen die Unteransprüche Bezug. Bei der erfindungsgemäßen Leitrolle für Drähte ist es vorgesehen, dass der Beschichtungsträger aus CFK besteht und unter Vermeidung einer Verschraubung nur durch einen Presssitz auf dem Stabilisierungsträger festgelegt ist. Durch die funktionelle Entkopplung des Stabilisierungsträgers von dem Beschichtungsträger kann die Beschichtung erfolgen, ohne dass der Stabilisierungsträger zum Beschichtungsort gebracht werden muss. Der Beschichtungsträger wird im unmittelbar verwendungsfähigen Zustand nach Art eines Moduls auf den Stabilisierungsträger aufgeschoben und kann unmittelbar anschließend in Betrieb genommen werden.

Der Stabilisierungsträger kann sehr steif gebaut sein und aus CFK oder Metall bestehen. Er verfügt in Verbindung mit dem Nabenteil über eine ausgezeichnete Festigkeit und Dimensionsbeständigkeit.

Der Beschichtungsträger kann mittels einer Presse sehr einfach bei Normaltemperatur axial auf den Stabilisierungsträger aufgeschoben und von ihm entfernt werden. Die Herbeinführung einer Temperaturdifferenz zwischen den zu verbindenden Teilen ist nicht erforderlich. Dennoch lassen sich die erforderlichen Drehmomente problemlos von dem Stabilisierungsträger auf den Beschichtungsträger übertragen und es ist von vornherein und unter allen Betriebsbedingungen ein ausgezeichneter Rundlauf gewährleistet.

Durch die Ausbildung des Beschichtungsträgers aus CFK resultieren sehr exakt vorherbestimmbare Passungsverhältnisse im Bereich der zylindrisch ausgebildeten, gegenseitigen Berührungsflächen beider Teile. Dies vereinfacht nicht nur die Lagerhaltung sondern es eröffnet die zusätzliche Möglichkeit, fertig beschichtete und konfektionierte Beschichtungsträger als Einmalteile herzustellen und ihrer Verwendung zuzuführen.

Der Beschichtungsträger und der Stabilisierungsträger berühren einander mit zylindrischen Flächen. Das Ab- und Aufschieben des Beschichtungsträgers auf den Stabilisierungsträger kann bei einer solchen Bauform in jeder der beiden möglichen Richtungen erfolgen.

Der Beschichtungs- und der Stabilisierungsträger können einander auch mit kegeligen Flächen berühren. Das Auf- und Abschieben kann bei einer solchen Bauform nur in einer vorgegebenen Richtung erfolgen. Es ist aber mit dem Vorteil verbunden, dass beim Auf- und Abschieben die Innenfläche des Beschichtungsträgers weniger Abnutzung erfährt. Die kegeligen Flächen sollen mit der Längsachse einen Winkel von 0,001 bis 5° einschließen, bevorzugt einen Winkel von 0,002 bis 0,05 °.

Die Beschichtung kann aus einem polymeren oder einem keramischen Werkstoff bestehen. Bevorzugt gelangt elastomeres Polyurethan zur Anwendung, das im Zuge eines Gießprozesses auf den Beschichtungsträger aufgebracht und in Abhängigkeit von dem gewünschten Anwendungsfall mit den notwendigen Rillen zur Führung des Drahtes versehen wird. Die verwendeten Werkstoffe müssen immer die notwendige chemische, thermische und mechanische Beständigkeit während der bestimmungsgemäßen Verwendung aufweisen, insbesondere eine gute Beständigkeit gegen die Einwirkung von Glykol.

Bei der Ausgestaltung nach Anspruch 2 ist es vorgesehen, dass der Beschichtungsträger aus kunstharzverklebten Fasersträngen besteht, die in mehreren Lagen übereinanderliegend angeordnet und der Längsachse des Hohlzylinders unter einem Winkel von +/- 30 bis 60 ° zugeordnet sind, wobei die in den in radialer Richtung aufeinander folgenden Schichten angeordneten Faserstränge einander gegensinnig überkreuzen. Sowohl in Umfangsrichtung als auch in Längsrichtung ist hierdurch die für die Montage und Demontage nötige Steifigkeit und Festigkeit gegeben, und der beschichtete Beschichtungsträger kann unabhängig von der Einbaurichtung gleichgut verwendet werden. Die daraus resultierende Querkontraktionszahl erleichtert außerdem das Aufschieben des Beschichtungsträgers.

Bevorzugt besteht der Beschichtungsträger aus kunstharzverklebten Fasersträngen, die in mehreren Lagen übereinanderliegend angeordnet und der Längsachse des Hohlzylinders unter einem Winkel von +/- 40 bis 50 ° zugeordnet sind, wobei die in den in radialer Richtung aufeinander folgenden Schichten angeordneten Faserstränge einander gegensinnig überkreuzen.

In dem Beschichtungsträger kann außerdem zumindest eine Schicht enthalten sein, in der die Faserstränge mit der Längsrichtung des Hohlzylinders einen Winkel von 80 bis 90° einnehmen. Die so ausgebildete Umfangslage verleiht dem Beschichtungsträger eine besonders große Steifigkeit und Festigkeit in Umfangsrichtung, was es begünstigt, große Drehmomente von dem Stabilisierungsträger auf den Beschichtungsträger übertragen zu können. Außerdem wird die Dimensionsbeständigkeit unterstützt, was wesentlich dazu beiträgt, eine gute Positionsgenauigkeit der Rillierung zu gewährleisten.

Wenn sowohl der Stabilisierungsträger als auch Beschichtungsträger aus CFK bestehen, können sie in Hinblick auf Ihre voneinander abweichende technische Funktion einen voneinander abweichenden Aufbau haben. Die radiale Gesamtdicke des Stabilisierungsträgers ist dabei wenigstens drei mal so groß wie diejenige des Beschichtungsträgers. Bevorzugt ist die Gesamtdicke des Stabilisierungsträgers wenigstens fünf mal so groß wie diejenige des Beschichtungsträgers. Die unterschiedlichen Gesamtdicken tragen unter anderem dem Umstand Rechnung, dass der Stabilisierungsträger maßgeblich unter dem Gesichtspunkt der davon aufzunehmenden Biegebeanspruchung dimensioniert ist und der Beschichtungsträger maßgeblich in Hinblick darauf, dass die Anforderungen des Presssitzes erfüllt werden. Der Stabilisierungsträger und der Beschichtungsträger vermögen sich durch diese Ausbildungen in ihren Eigenschaften nach der Montage besonders gut zu ergänzen.

Wenn der Stabilisierungsträger aus Metall, insbesondere aus Stahl besteht, ist die Wanddicke ebenfalls wesentlich größer als diejenige des Beschichtungsträgers.

Der Beschichtungsträger hat ohne die Beschichtung zweckmäßig eine Wanddicke, die 0,5 bis 8 % seines Außendurchmessers beträgt, bevorzugt 1 bis 3 % des Außendurchmessers. Innerhalb der angegebenen Bereiche ist eine unproblematische Herstellung, Beschichtung und Bearbeitung bei geringem Gewicht und niedrigen Herstellkosten gewährleistet. Dadurch wird ermöglicht, auch bereits vorhandene Leitrollen konventioneller Bauart im Sinne der Erfindung umzurüsten und mit einem Beschichtungsträger auszustatten, der nur zur einmaligen Verwendung bestimmt ist und der mit der darauf haftend festgelegten, fertig rillierten Beschichtung für Drähte versehen ist. Ein Rücktransport und eine erneute Beschichtung und Rillierung von durch Abnutzung verbrauchten Beschichtungsträgern ist in diesem Falle entbehrlich.

Die stirnseitigen Flansche können den Stabilisierungsträger radial nur auf der Innenseite anliegend berühren oder mit einem umlaufenden Bund versehen sein, der die Stirnflächen des Stabilisierungsträgers überdeckt. Die Bunde sollen den gleichen Außendurchmesser wie der Stabilisierungträger aufweisen. Dies erleichtert das wiederholte Aufschieben des nach Art eines Rohres gestalteten Beschichtungsträgers auf den Stabilisierungsträger unter Vermeidung einer mechanischen Beschädigung der stirnseitigen Enden des Stabilisierungsträgers. Es wird insbesondere ausgeschlossen, dass sich Faser- oder Kunststoffbestandteile aus dem CFK - Material herauslösen und in einen sich bildenden den Zwischenraum zwischen dem Beschichtungsträger und dem Stabilisierungsträger hineingetragen werden können.

Der Stabilisierungsträger kann zwischen den stirnseitigen Flanschen durch zumindest einen weiteren Flansch radial abgestützt sein. Hierdurch wird verhindert, dass sich bei einseitiger Belastung ovale Deformierungen ergeben.
Die Flansche und der Stabilisierungsträger sind zweckmäßig ebenfalls durch Kunstharz verklebt und dadurch unverrückbar aneinander festgelegt. Falls der Stabilisierungsträger aus Metall besteht, gelangt zweckmäßig eine gegenseitige Verschweißung zur Anwendung.

Der Stabilisierungsträger ist zweckmäßig durch eine außenseitig in einem Schleifprozess rotationssymmetrisch kalibrierte Fläche begrenzt, die leicht konisch oder zylindrisch ausgebildet ist. Die Erzielung eines hinreichend guten und dennoch lösbaren Presssitzes wird dadurch begünstigt.

Die innenseitige Zylinderfläche des Beschichtungsträgers ist herstellungsbedingt ohnehin sehr genau kalibriert. Die Herstellung erfolgt im Zuge eines Wickelprozesses, bei dem kunstharzgetränkte Faserstränge auf einen konischen oder zylindrischen Formkern aufgewickelt und durch nachfolgende Verfestigung und Aushärtung des Kunstharzens bleibend fixiert werden.

Der Beschichtungsträger kann außenseitig durch eine Zylinderfläche begrenzt sein, die zweckmäßig durch ein so genanntes Abreißgewebe im Wickelprozess kalibriert und dabei zugleich aufgeraut ist. Die Herstellung einer solchen Zylinderfläche erfolgt, indem ein kunstharzfreies Gewebe aus Polyamid oder einem ähnlichen Werkstoff in einem abschließenden Verfahrensschritt unter Vorspannung auf die noch unverfestigte, letzte Wickellage aus kunstharzgetränktem CFK aufgewickelt und in die letzte Wickellage eingepresst wird. Dabei wird überschüssiges Kunstharz durch die Maschen des Gewebes radial nach außen gepresst und eine gewebeartige Oberflächenstrukturierung der Außenseite des Beschichtungsträgers erhalten, die bei der Aushärtung des CFK Mantels erhalten bleibt und nach der Entfernung des Gewebes durch Abreißen eine gute Haftungsgrundlage für die nachfolgend aufgebrachte Beschichtung hinterlässt.

Das äußerste Lage des Beschichtungsträgers kann nach der Aushärtung auch oder ergänzend durch einen Schleifprozess kalibriert und aufgeraut sein. Dies ermöglicht es, eine sehr präzise dimensionierte Beschichtung aus elastomerem Polyurethan auf den Beschichtungsträger aufzubringen und die Beschichtung in der Aufrauung des Beschichtungsträgers besonders fest zu verankern. Das Aufbringen der Beschichtung kann in einem Gießprozess erfolgen.

### Beschreibung bevorzugter Ausführungsbeispiele der Erfindung

Die Erfindung wird im Folgenden anhand von Ausführungsbeispielen unter Bezugnahme auf eine Zeichnung näher erläutert. Hierbei zeigen:
- Fig. 1: eine Leitrolle für Drähte in längsgeschnittener Darstellung
- Fig. 2: einen Eckbereich aus der Leitrolle für Drähte nach Fig. 1 in längsgeschnittener Darstellung.

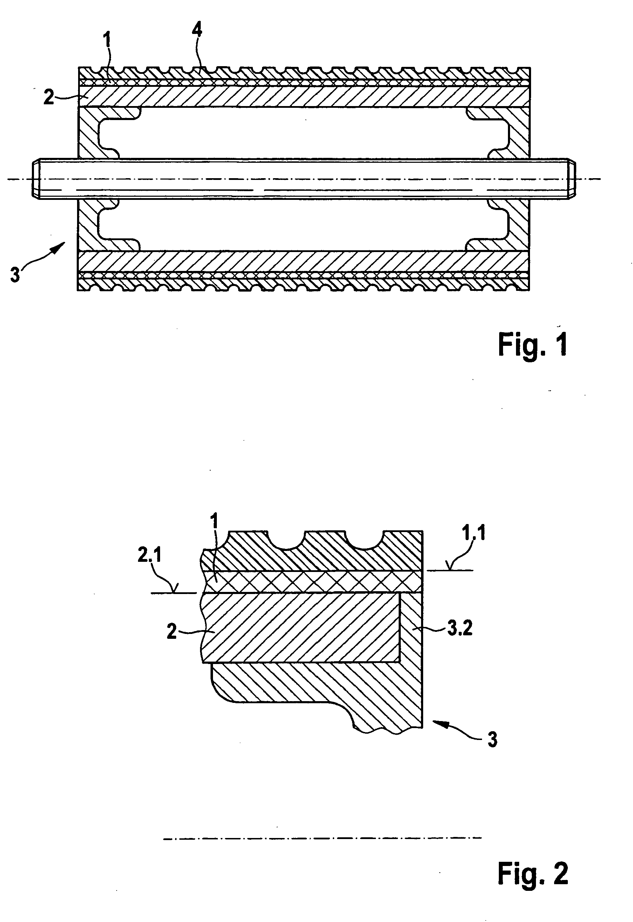

Die in Fig. 1 in längsgeschnittener Darstellung wiedergegebene Leitrolle für Drähte ist zum Abtrennen dünner Scheiben von einem Hartstoff, z.B. einem Siliziumkristall mit Hilfe der Drähte bestimmt. Dabei wird ein gegebenenfalls mit Diamantstaub beschichteter oder mit einer Schneidemulsion benetzter Draht in mehreren Windungen gemeinsam um zwei oder mehr achsparallele Rollen geschlungen und der Hartstoff parallel zueinander zugleich an mehreren benachbarten Stellen von dem Draht durchtrennt und in dünne Scheiben zerlegt. Die Rollen weisen zu diesem Zweck einen Beschichtungsträger auf, der mit einer fest an seiner Außenseite haftenden Beschichtung 4 aus Polyurethan versehen ist. Die Beschichtung 4 ist zur Führung des Drahtes mit sich in Umfangsrichtung erstreckenden Rillen versehen.

Der Beschichtungsträger 1 hat die Gestalt eines Hohlzylinders und ist durch einen ebenfalls hohlzylindrischen Stabilisierungsträger 2 aus CFK oder Stahl auf einem Nabenteil aus Stahl abgestützt. Dabei ist es vorgesehen, dass der Beschichtungsträger 1 aus CFK besteht und unter Vermeidung einer Verschraubung oder des Aufschrumpfens nur durch einen Presssitz auf dem Stabilisierungsträger 2 festgelegt ist und dass das Nabenteil den Stabilisierungsträger mit radialen Flanschen zumindest im Bereich der Stirnseiten innenseitig berührt. Der Beschichtungsträger 1 besteht aus kunstharzverklebten Fasersträngen, die in mehreren Lagen übereinanderliegend angeordnet und der Längsachse des jeweiligen Hohlzylinders unter einem Winkel von +/- 30 bis 60 ° zugeordnet sind, wobei die in den in radialer Richtung aufeinander folgenden Schichten angeordneten Faserstränge einander gegensinnig überkreuzen. Der bevorzugte Winkel beträgt +/- 40 bis 50 °. Zusätzlich ist eine Schicht aus sich im wesentlichen in Umfangsrichtung erstreckenden Fasern in dem Beschichtungsträger 1 enthalten, um die Steifigkeit und Festigkeit in Umfangsrichtung besonders zu steigern. Auch im Zuge einer sehr langen Gebrauchsdauer ist daher keine Relativverschiebung des Beschichtungsträgers zu befürchten.

Der Beschichtungsträger kann unabhängig von seiner Drehrichtung zur Anwendung gelangen, was die Montage sehr vereinfacht. Die Montage und Demontage kann bei Normaltemperatur erfolgen, indem der betriebsbereit beschichtete Beschichtungsträger mittels einer Presse auf den Stabilisierungsträger aufgeschoben bzw. davon abgeschoben wird. Es ist zur Festlegung des Beschichtungsträgers weder erforderlich, eine Verschraubung vorzunehmen, noch eine spezielle Werkstoffpaarung bezüglich des Beschichtungsträgers und des Stabilisierungsträgers anzuwenden und Temperaturbereiche bei der bestimmungsgemäßen Verwendung zu vermeiden, bei denen eine Ablösung infolge der unterschiedlichen Wärmedehnungen des Beschichtungsträgers und des Stabilisierungsträgers zu befürchten ist. Dies vereinfacht die Herstellung, die Montage und Demontage des rohrförmigen Beschichtungsträgers wesentlich sowie die Verwendung der gebrauchsfertigen Leitrolle für Drähte. Dennoch weist diese einen ausgezeichneten Rundlauf auf.

Der Stabilisierungsträger 2 und der Beschichtungsträger 1 haben, bedingt durch ihre unterschiedliche Funktion einen von einander abweichenden Aufbau mit der Maßgabe, dass die radiale Schichtdicke des Stabilisierungsträgers 2 wenigstens drei, bevorzugt wenigstens fünf mal so groß ist wie diejenige des Beschichtungsträgers 1. Die radiale Schichtdicke des Stabilisierungsträgers kann je nach Länge der Leitrolle für Drähte 20 bis 60 mm betragen.

Der Beschichtungsträger hat, ohne Beschichtung gemessen, eine Wanddicke, die 1 bis 3% des Außendurchmessers beträgt. Er kann dadurch problemlos hergestellt, beschichtet und montiert werden.

Die stirnseitigen Flansche des Nabenteils 3 sind bündig in den Innenumfang des Stabilisierungsträgers 2 eingeklebt bzw. eingeschweißt. Der Stabilisierungsträger kann demgemäß aus CFK oder Stahl bestehen.

Falls die Flansche und der Stabilisierungsträger 2 durch Kunstharz miteinander verklebt sind, gelangt zweckmäßig ein Kunstharz zur Anwendung, das chemisch mit demjenigen übereinstimmt, durch das die Faserstränge des Beschichtungsträgers und des Stabilisierungsträgers verklebt sind.

Der Stabilisierungsträger kann zwischen den stirnseitigen, metallischen Flanschen durch zumindest einen weiteren, metallischen Flansch abgestützt sein, um zu verhindern, dass sich unter dem Druck andauernder, einseitiger Belastungen ovale Deformierungen ergeben. Die Anzahl der weiteren Flansche kann nach Bedarf verändert werden.

Der Stabilisierungsträger 2 ist außenseitig durch eine Zylinderfläche 2.1 begrenzt, die durch einen Schleifprozess kalibriert ist. Es bereitet dem Fachmann dabei keine Schwierigkeiten, den beim Schleifprozess eingestellten Durchmesser so festzulegen, dass einerseits ein sicherer Presssitz erhalten wird, der gewährleistet, dass sich der Beschichtungsträger während der bestimmungsgemäßen Verwendung nicht unerwünscht auf dem Stabilisierungsträger verdreht oder verschiebt, und der es dennoch gestattet, den Beschichtungsträger bei Bedarf mit einer Presse in Längsrichtung von dem Stabilisierungsträger abzuschieben.

Falls eine bereits vorhandene Leitrolle für Drähte im Sinne der Erfindung umzurüsten ist, wird deren gegebenenfalls bereits vorhandene Beschichtung entfernt und der Außendurchmesser im Sinne der vorstehenden Darlegungen kalibriert.

Der Beschichtungsträger 1 ist außenseitig durch eine Zylinderfläche 1.1 begrenzt, die durch ein zuvor entferntes Abreißgewebe eine Gewebestruktur hat und /oder durch einen Schleifprozess kalibriert und aufgeraut ist, um die Polyurethanbeschichtung besonders sicher zu verankern und die Beschichtung hinsichtlich ihres Profils sehr genau ausbilden zu können.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Leitrolle für Drähte, umfassend einen parallel zur Längsrichtung abschiebbaren Beschichtungsträger (1) in Gestalt eines Hohlzylinders, auf dem eine fest haftende Beschichtung (4) festgelegt ist, die Führungsrillen für die Drähte aufweist, und der durch einen Stabilisierungsträger (2) aus CFK oder aus Metall auf einem Nabenteil abgestützt ist, wobei der Beschichtungsträger (1) aus CFK besteht, **dadurch gekennzeichnet, dass** der Beschichtungsträger (1) unter Vermeidung einer Verschraubung nur durch einen zylindrischen oder konischen Presssitz auf dem Stabilisierungsträger (2) festgelegt ist.

2. Leitrolle für Drähte nach Anspruch 1, **dadurch gekennzeichnet, dass** der Beschichtungsträger (1) und der Stabilisierungsträger (2) aus kunstharzverklebten Fasersträngen bestehen, die in mehreren Lagen übereinanderliegend angeordnet und der Längsachse des Hohlzylinders unter einem Winkel von +/- 30 bis 60 ° zugeordnet sind, wobei die in den in radialer Richtung aufeinander folgenden Schichten angeordneten Faserstränge einander gegensinnig überkreuzen.

3. Leitrolle für Drähte nach Anspruch 1, **dadurch gekennzeichnet, dass** der Beschichtungsträger (1) und der Stabilisierungsträger (2) aus kunstharzverklebten Fasersträngen bestehen, die in mehreren Lagen übereinanderliegend angeordnet und der Längsachse des Hohlzylinders unter einem Winkel von +/- 40 bis 50 ° zugeordnet sind, wobei die in den in radialer Richtung aufeinander folgenden Schichten angeordneten Faserstränge einander gegensinnig überkreuzen.

4. Leitrolle für Drähte nach Anspruch 2 oder 3, **dadurch gekennzeichnet, dass** der Beschichtungsträger (1) und/oder der Stabilisierungsträger (2) zumindest eine Lage aus kunstharzverklebten Fasersträngen umfassen, die sich im wesentlichen in Umfangsrichtung erstreckt.

5. Leitrolle für Drähte nach einem der Ansprüche 1 bis 4, **dadurch gekennzeichnet, dass** der Stabilisierungsträger (2) und der Beschichtungsträger (1) einen von einander abweichenden Aufbau haben, mit der Maßgabe, dass die radiale Schichtdicke des Stabilisierungsträgers (2) wenigstens drei mal so groß ist wie diejenige des Beschichtungsträgers (1).

6. Leitrolle für Drähte nach einem der Ansprüche 1 bis 4, **dadurch gekennzeichnet, dass** der Stabilisierungsträger (2) und der Beschichtungsträger (1) einen übereinstimmenden Aufbau haben, mit der Maßgabe, dass die radiale Schichtdicke des Stabilisierungsträgers (2) wenigstens fünf mal so groß ist wie diejenige des Beschichtungsträgers (1).

7. Leitrolle für Drähte nach einem der Ansprüche 1 bis 6, **dadurch gekennzeichnet, dass** der Beschichtungsträger (1) eine Wanddicke hat, die 0,5 bis 8 % des zugehörigen Außendurchmessers beträgt.

8. Leitrolle für Drähte nach einem der Ansprüche 1 bis 7, **dadurch gekennzeichnet, dass** der Beschichtungsträger (1) eine Wanddicke hat, die 1 bis 3 % des zugehörigen Außendurchmessers beträgt.

9. Leitrolle für Drähte nach einem der Ansprüche 1 bis 8, **dadurch gekennzeichnet, dass** das Nabenteil (3) den Stabilisierungsträger (2) mit radialen Flanschen zumindest im Bereich der stirnseitigen Enden zumindest radial von innen berührt.

10. Leitrolle für Drähte nach einem der Ansprüche 1 bis 9, **dadurch gekennzeichnet, dass** die stirnseitigen Flansche des Nabenteils (3) mit jeweils einem radial nach außen vorstehenden Bund (3.2) versehen sind und dass die Bunde (3.2) den Stabilisierungsträger (2) stirnseitig überdecken.

11. Leitrolle für Drähte nach Anspruch 10 , **dadurch gekennzeichnet, dass** die Bunde (3.2) außenseitig durch umlaufende Flächen begrenzt sind, die die Umfangsfläche des Stabilisierungsträgers (2) als gedachte Verlängerung kontinuierlich fortschreitend ergänzen.

12. Leitrolle für Drähte nach einem der Ansprüche 1 bis 11, **dadurch gekennzeichnet, dass** der Stabilisierungsträger (2) zwischen den stirnseitigen Flanschen durch zumindest einen weiteren Flansch des Nabenteils (3) abgestützt ist.

13. Leitrolle für Drähte nach einem der Ansprüche 1 bis 12, **dadurch gekennzeichnet, dass** die Flansche des Nabenteils (3) und der Stabilisierungsträger (2) durch Kunstharz verklebt bzw. verschweißt sind.

14. Leitrolle für Drähte nach einem der Ansprüche 1 bis 13, **dadurch gekennzeichnet, dass** der Stabilisierungsträger (2) außenseitig durch eine Zylinderfläche (2.1) begrenzt ist, die durch einen Schleifprozess kalibriert ist.

15. Leitrolle für Drähte nach einem der Ansprüche 1 bis 14, **dadurch gekennzeichnet, dass** der Beschichtungsträger (1) außenseitig durch eine Zylinderfläche (1.1) begrenzt ist, die durch einen Schleifprozess kalibriert ist.

16. Leitrolle für Drähte nach Anspruch 15, **dadurch gekennzeichnet, dass** die Zylinderfläche (1.1) durch einen Schleifprozess und/oder ein Abreißgewebe reliefartig strukturiert ist.

17. Leitrolle für Drähte nach einem der Ansprüche 1 bis 16, **dadurch gekennzeichnet, dass** der Beschichtungsträger (1) mit der darauf haftend festgelegten Beschichtung (4) und den darin eingreifenden Führungsrillen für Drähte nur zur einmaligen Verwendung bestimmt ist.

## Claims

1. A guide roller for wires, comprising a coating support (1) in the form of a hollow cylinder which is slidable parallel to the longitudinal direction, on which a coating (4) is fixed permanently by adhesion, and having guide grooves for the wires, and which is supported on a hub part by a stabilising support (2) made from CFP or metal, wherein the coating support (1) is made of CFP, **characterized in that** the coating support (1) is secured on the stabilising support (2) only by a cylindrical or conical press-fitting, avoiding the use of a screw connection.

2. The guide roller for wires as recited in claim 1, **characterized in that** the coating support (1) and the stabilising support (2) consist of fibre strands stuck together with synthetic resin, which are arranged in multiple plies one on top of the other and are aligned at an angle of +/- 30 to 60° relative to the longitudinal axis of the hollow cylinder, wherein the successive fibre strands in the radial direction intersect each other in the opposite direction.

3. The guide roller for wires as recited in claim 1, **characterized in that** the coating support (1) and the stabilising support (2) consist of fibre strands stuck together with synthetic resin, which are arranged in multiple plies one on top of the other and are aligned at an angle of +/- 40 to 50° relative to the longitudinal axis of the hollow cylinder, wherein the successive fibre strands in the radial direction intersect each other in the opposite direction.

4. The guide roller for wires as recited in claim 2 or 3, **characterized in that** the coating support (1) and/or the stabilising support (2) comprise at least one ply that consists of fibre strands stuck together with synthetic resin and extends essentially in the circumferential direction.

5. The guide roller for wires as recited in any of claims 1 to 4, **characterized in that** the stabilising support (2) and the coating support (1) have constructions that differ from one another, providing that the radial layer thickness of the stabilising support (2) is at least three times greater than that of the coating support (1).

6. The guide roller for wires as recited in any of claims 1 to 4, **characterized in that** the stabilising support (2) and the coating support (1) have constructions that are the same as one another, providing that the radial layer thickness of the stabilising support (2) is at least five times greater than that of the coating support (1).

7. The guide roller for wires as recited in any of claims 1 to 6, **characterized in that** the coating support (1) has a wall thickness equal to 0.5 to 8% of the associated outer diameter.

8. The guide roller for wires as recited in any of claims 1 to 7, **characterized in that** the coating support (1) has a wall thickness equal to 1 to 3% of the associated outer diameter.

9. The guide roller for wires as recited in any of claims 1 to 8, **characterized in that** the hub part (3) is in contact with the stabilising support (2) at least radially from the inside at least in the area of the frontal face ends thereof via radial flanges.

10. The guide roller for wires as recited in any of claims 1 to 9, **characterized in that** each of the frontal face flanges of the hub part (3) is furnished with a collar (3.2) protruding radially outwards and that the collars (3.2) cover the frontal face of the stabilising support (2).

11. The guide roller for wires as recited in claim 10, **characterized in that** the collars (3.2) are delimited on the outside by circumferential surfaces that progressively and continuously complete the circumferential surface of the stabilising support (2) in the manner of a notional extension.

12. The guide roller for wires as recited in any of claims 1 to 11, **characterized in that** the stabilising support (2) is supported between the frontal face flanges by at least one additional flange of the hub part (3).

13. The guide roller for wires as recited in any of claims 1 to 12, **characterized in that** the flanges of the hub part (3) and the stabilising support (2) are stuck together with synthetic resin or welded together.

14. The guide roller for wires as recited in any of claims 1 to 13, **characterized in that** the stabilising support (2) is delimited on the outside by a cylindrical surface (2.1) that is calibrated by a grinding process.

15. The guide roller for wires as recited in any of claims 1 to 14, **characterized in that** the coating support (1) is delimited on the outside by a cylindrical surface (1.1) that is calibrated by a grinding process.

16. The guide roller for wires as recited in claim 15, **characterized in that** the cylindrical surface (1.1) is provided with a relief-type profile by a grinding process and/or by a peel ply.

17. The guide roller for wires as recited in any of claims 1 to 16, **characterized in that** the coating support (1) with the fixed coating (4) securely attached thereto and the guide grooves for wires incorporated therein is intended for one-time use only.

## Revendications

1. Rouleau de guidage pour fils, comprenant un support de revêtement (1) pouvant être poussé parallèlement au sens longitudinal, sous la forme d'un cylindre creux sur lequel est fixé un revêtement (4) adhérant fermement qui présente des rainures de guidage pour les fils et qui est soutenu sur une pièce de moyeu par un support de stabilisation (2) en plastique renforcé à la fibre de carbone [PRFC] ou en métal, le support de revêtement (1) étant en plastique renforcé à la fibre de carbone [PRFC], **caractérisé en ce que** le support de revêtement (1) n'est fixé sur le support de stabilisation (2) que par un ajustage serré cylindrique ou conique en évitant une fixation par vissage.

2. Rouleau de guidage pour fils selon la revendication 1 **caractérisé en ce que** le support de revêtement (1) et le support de stabilisation (2) sont en stratifils collés à la résine synthétique qui sont disposés superposés en plusieurs couches et rangés dans l'axe longitudinal du cylindre creux sous un angle de +/- 30 à 60°, les stratifils disposés en couches successives dans le sens radial se croisant les uns les autres en sens inverse.

3. Rouleau de guidage pour fils selon la revendication 1 **caractérisé en ce que** le support de revêtement (1) et le support de stabilisation (2) sont en stratifils collés à la résine synthétique qui sont disposés superposés en plusieurs couches et rangés dans l'axe longitudinal du cylindre creux sous un angle de +/- 40 à 50°, les stratifils disposés en couches successives dans le sens radial se croisant les uns les autres en sens inverse.

4. Rouleau de guidage pour fils selon la revendication 1 **caractérisé en ce que** le support de revêtement (1) et/ou le support de stabilisation (2) comprennent au moins une couche de stratifils collés à la résine synthétique qui s'étend pour l'essentiel dans le sens périphérique.

5. Rouleau de guidage pour fils selon une quelconque des revendications 1 à 4 **caractérisé en ce que** le support de stabilisation (2) et le support de revêtement (1) possèdent une structure s'écartant l'une de l'autre avec l'impératif que l'épaisseur de couche radiale du support de stabilisation (2) soit au moins trois fois aussi grande que celle du support de revêtement (1).

6. Rouleau de guidage pour fils selon une quelconque des revendications 1 à 4 **caractérisé en ce que** le support de stabilisation (2) et le support de revêtement (1) possèdent une structure concordante avec l'impératif que l'épaisseur de couche radiale du support de stabilisation (2) soit au moins cinq fois aussi grande que celle du support de revêtement (1).

7. Rouleau de guidage pour fils selon une quelconque des revendications 1 à 6 **caractérisé en ce que** le support de revêtement (1) a une épaisseur de paroi qui est de 0,5 à 8 % du diamètre extérieur correspondant.

8. Rouleau de guidage pour fils selon une quelconque des revendications 1 à 7 **caractérisé en ce que** le support de revêtement (1) a une épaisseur de paroi qui est de 1 à 3% du diamètre extérieur correspondant.

9. Rouleau de guidage pour fils selon une quelconque des revendications 1 à 8 **caractérisé en ce que** la partie de moyeu (3) touche au moins radialement de l'intérieur le support de stabilisation (2) avec les flasques radiaux au moins dans la zone des extrémités côté face.

10. Rouleau de guidage pour fils selon une quelconque des revendications 1 à 9 **caractérisé en ce que** les flasques de face de la partie de moyeu (3) sont munies respectivement d'un épaulement (3.2) en saillie vers l'extérieur et **en ce que** les épaulements (3.2) recouvrent côté face le support de stabilisation (2).

11. Rouleau de guidage pour fils selon la revendication 10 **caractérisé en ce que** les épaulements (3.2) sont limités côté extérieur par des surfaces périphériques, qui complètent progressivement en continu la surface périphérique (2) en tant que prolongation envisagée.

12. Rouleau de guidage pour fils selon une quelconque des revendications 1 à 11 **caractérisé en ce que** le support de stabilisation (2) est soutenu entre les flasques côté face par au moins un autre flasque de la partie de moyeu (3).

13. Rouleau de guidage pour fils selon une quelconque des revendications 1 à 12 **caractérisé en ce que** les flasques de la partie de moyeu (3) et le support de stabilisation (2) sont collés ou soudés par de la résine synthétique.

14. Rouleau de guidage pour fils selon une quelconque des revendications 1 à 13 **caractérisé en ce que** le support de stabilisation (2) est limité côté extérieur par une surface cylindrique (2.1) qui est calibrée par un processus de rectification.

15. Rouleau de guidage pour fils selon une quelconque des revendications 1 à 14 **caractérisé en ce que** le support de revêtement (1) est limité côté extérieur par une surface cylindrique (1.1) qui est calibrée par un processus de rectification.

16. Rouleau de guidage pour fils selon la revendication 15 **caractérisé en ce que** la surface cylindrique (1.1) est structurée du point de vue relief par un processus de rectification et/ou un tissu de rupture.

17. Rouleau de guidage pour fils selon une quelconque des revendications 1 à 16 **caractérisé en ce que** le support de revêtement (1) n'est destiné qu'à un usage unique avec le revêtement (4) qui y est appliqué par adhérence et les rainures de guidage pour fils pénétrant dedans.
